# EUROPÄISCHE PATENTSCHRIFT

(11) **EP 2 599 175 B1**
(45) Veröffentlichungstag und Bekanntmachung des Hinweises auf die Patenterteilung: **20.08.2014**
(21) Anmeldenummer: 11738404.0
(22) Anmeldetag: 28.07.2011
(51) Int. Cl.: H02G 3/30, F03D 11/00

(54) **BEFESTIGUNGSSYSTEM FÜR KABEL, INSBESONDERE BEI WINDKRAFTANLAGEN**
ATTACHMENT SYSTEM FOR CABLES, IN PARTICULAR FOR WIND POWER INSTALLATIONS
SYSTÈME DE FIXATION POUR CÂBLES, EN PARTICULIER POUR DES ÉOLIENNES

(30) Priorität: 12.08.2010 US 805680; 29.07.2010 DE 102010032687
(43) Veröffentlichungstag der Anmeldung: 05.06.2013
(73) Patentinhaber: HYDAC Accessories GmbH, 66280 Sulzbach/Saar (DE)
(72) Erfinder: EVEN, Rainer, 66123 Saarbrücken (DE); YAGCI, Burhan, 66280 Sulzbach (DE); MARYNIOK, Peter, 66693 Mettlach (DE); HISS, Helmut, 75228 Ispringen (DE)
(74) Vertreter: Bartels, Martin Erich Arthur
(86) Internationale Anmeldenummer: PCT/EP2011/003781
(87) Internationale Veröffentlichungsnummer: WO 2012/013346

(56) Entgegenhaltungen:
- EP-A2- 0 681 133
- WO-A1-00/79660
- DE-U1- 7 709 148
- GB-A- 2 466 919

## Beschreibung

Die Erfindung betrifft ein Befestigungssystem für Kabel, insbesondere bei Windkraftanlagen, mit einem Grundkörper, der an einer Tragstruktur festlegbar ist und Kabeldurchführungen bildet, die zum Einlegen von Kabeln jeweils eine Öffnung aufweisen, die durch eine Abdeckeinrichtung verschließbar sind, mittels deren eine Haltekraft auf die Kabel ausübbar ist, wobei die Kabeldurchführungen am Grundkörper in einer sich zumindest über einen Teil eines Ringes erstreckenden Anordnung mit jeweils radial außenliegender Öffnung angeordnet sind und wobei die Abdeckeinrichtung Haltekörper aufweist, die zur Vorfixierung von in die Kabeldurchführungen eingelegten Kabeln mit dem Grundkörper verrastbar sind.

Um die in Windkraftanlagen erzeugten Energien abzuführen sowie für andere betriebliche Zwecke, wie Steuerung, Überwachung und dergleichen, sind Kabel, die durch den Turm ins Maschinenhaus führen an den entsprechenden Tragstrukturen, insbesondere den Turmsegmenten, zuverlässig festzulegen. Üblicherweise werden hierfür Befestigungen mit schellenartigen Grundkörpern benutzt, in denen darin eingelegte Kabel sicherbar sind. Derartige Befestigungssysteme, bei denen auch eine entsprechende Anzahl von Schraubvorgängen durchzuführen sind, erfordern einen hohen Montageaufwand. Dies gilt insbesondere für die Befestigung von Kabeln, die von unten durch den Turm zum Maschinenhaus geführt und an die Generatoreinheit anzuschließen sind. Bei üblichen Windkraftanlagen kann diese Generatoreinheit zusammen mit dem Maschinenhaus bis zu drei Umdrehungen ausführen, bevor das Maschinenhaus zurückgesteuert wird. Damit die Kabel die Bewegung mitmachen können, werden sie über eine in den Turm hängende Kabelschlaufe geführt. Damit die Kabel bei Drehbewegungen nicht aneinander scheuern, müssen die Kabel hierbei auf Distanz gehalten werden. Üblicherweise werden hierfür die Kabel über eine runde Tragstruktur gehalten, beispielsweise in Form eines Rohrstückes, um das die Kabel verteilt und daran mit einfachen Schellen befestigt werden. Eine derartige, in beträchtlicher Höhe stattfindende Montage gestaltet sich sehr aufwendig.

Ein Befestigungssystem der eingangs genannten Art ist beispielsweise aus EP 0 681 133 A2 bekannt. Das bekannte Befestigungssystem ist rohrschellenartig aufgebaut, wobei Aufnahmeräume für jeweils eine Leitung durch an einem oberen Schellenteil und an einem unteren Schellenteil ausgebildete Halbräume mit halbkreisförmigem Querschnitt festgelegt werden. Beide Schellenteile sind gelenkartig miteinander verbunden und durch ein Rastteil miteinander fest verbindbar.

Die DE 77 09 148 U1 beschreibt einen Abstandshalter mit Arretiervorrichtung zur Lagefixierung von in radial angeordneten Nuten eingebrachten Leitungen, wobei die Arretiervorrichtung aus in Eindrückrichtung schräg angeordneten Rastfedern besteht, welche die Leitungen gegen den jeweiligen Nutgrund drücken und damit arretieren können.

In der WO 00/79660 A1 sind die Leitungen in Ausnehmungen eines Halters gehalten und durch ein beabstandet angeordnetes Spannband gegen Herausrutschen aus den Ausnehmungen gesichert.

Bei dem bekannten Befestigungssystem wird durch im oberen Schellenteil ausgebildete Hohlräume eine gewisse Anpresskraft auf in der Schelle angeordnete Leitungen ausgeübt, hinsichtlich einer bei vertikal verlaufenden Leitungen erforderlichen Haltekraft lässt die bekannte Lösung noch Wünsche offen.

Im Hinblick hierauf liegt der Erfindung die Aufgabe zugrunde, ein für das fragliche Einsatzgebiet besonders geeignetes Befestigungssystem zur Verfügung zu stellen.

Erfindungsgemäß ist diese Aufgabe durch ein Befestigungssystem gelöst, das die Merkmale des Patentanspruches 1 in seiner Gesamtheit aufweist.

Zur Bildung einer vom Maschinenhaus in den Turm hängenden Kabelschlaufe sind die Kabeldurchführungen am Grundkörper in einer zumindest einen Teil eines Ringes erstreckenden Anordnung mit jeweils radial außenliegender Öffnung angeordnet. Dadurch, dass außerdem als Bestandteil der Abdeckeinrichtung Haltekörper vorhanden sind, die zur Vorfixierung von in die Kabeldurchführungen eingelegten Kabeln mit dem Grundkörper verrastbar sind, lassen sich die Kabel, da sie gegen Herausfallen gesichert sind, nacheinander bequem in die Kabeldurchführungen einlegen. Da die Abdeckeinrichtung ferner ein Spannband aufweist, das über die Haltekörper die Haltekraft auf die Kabel ausübt, ist für die Sicherung der gesamten Anzahl der in Ringanordnung gehaltenen Kabel lediglich ein einziger Schraubvorgang für das Spannen des Spannbandes erforderlich.

Als bevorzugte Ausführungsform kann der Grundkörper die Form eines kreisrunden Ringkörpers mit einem auf einem vorzugsweise runden Tragteil anbringbaren Innenring und einem diesen in einem Abstand umgebenden Außenring haben, der die Kabeldurchführungen bildet. Die daran festgelegten Kabel bilden somit einen Kabelring mit einem entsprechenden radialen Abstand zum Tragteil, so dass ein Kabelbündel verhältnismäßig großen Durchmessers mit einer entsprechend großen Anzahl von Einzelkabeln gebildet werden kann.

Für eine Anbringung des Grundkörpers an einer flachen Tragstruktur kann die Anordnung in vorteilhafterweise so getroffen sein, dass der Grundkörper ein die Kabeldurchführungen bildendes und sich über einen Teil einer Kreislinie erstreckendes Ringteil aufweist, dessen Enden durch eine damit einstückige Traverse in Form eines geraden Balkens verbunden sind, der mit einem Tragteil in Form einer Konsole verbunden ist, deren Enden über das jeweilige Ende des Balkens überstehend, und dass an den überstehenden Enden die Enden des Spannbandes verankert sind.

Während vorzugsweise der Ringkörper oder das Ringteil einen runden Kreis bzw. Teilkreis bilden, versteht sich, dass auch eine unrunde, etwa polygonale Ringform möglich ist.

Bei besonders vorteilhaften Ausführungsbeispielen kann der Grundkörper die Kabeldurchführungen in Form von trogartigen Muldenkörpern aufweisen, die durch sich in Umfangsrichtung erstreckende Wandteile miteinander verbunden sind. Bei einer derartigen Gestaltung kann die Anordnung so getroffen sein, dass die Haltekörper ein in der Funktionsstellung in die Öffnung der Muldenkörper ragendes Klemmteil aufweisen, das eine die Haltekraft auf die jeweiligen Kabel aufbringende Anlagefläche bildet.

Mit besonderem Vorteil kann die Anordnung so getroffen sein, dass die der Anlagefläche entgegengesetzte Deckfläche der Haltekörper als Auflagefläche des Spannbandes eine Wölbung aufweist, die der umfänglichen Kreislinie des Außenringes angepasst ist. Die so geformte Deckfläche der Haltekörper bildet nicht nur einen Schutz gegen das Spannband, sondern bildet auch jeweils einen Teil einer gedachten, umfänglichen Zylinderfläche des Außenringes für eine optimale flächige Anlage des Spannbandes.

Hinsichtlich der Gestaltung des Außenringes kann die Anordnung mit Vorteil so getroffen sein, dass der Außenring zwischen den Muldenkörpern jeweils zwei Wandteile aufweist, die die axialen Außenseiten des Außenringes begrenzen und in denen sich beidseits der Muldenkörper radial außenseitig offene Ausnehmungen befinden, in denen Rasten derart ausgebildet sind, dass die Haltekörper mit Rastnasen, die an den die Muldenkörper übergreifenden Teilen der Haltekörper vorgesehen sind, gegen eine radial nach außen gerichtete Bewegung sicherbar sind. In vorteilhafter Weise können bei einem derartigen Ausführungsbeispiel die Wandteile beidseits der an der Deckfläche der Haltekörper befindlichen Anlagefläche Führungsflächen für die seitliche Führung des Spannbandes bilden.

Bei weiteren vorteilhaften Ausführungsbeispielen kann die Anordnung auch so getroffen sein, dass die Muldenkörper an ihren von Teilen der Haltekörper übergreifbaren Außenseiten Rasten aufweisen, die derart ausgebildet sind, dass die Haltekörper mit daran befindlichen Rastnasen gegen eine radial nach außen gerichtete Bewegung sicherbar sind.

Bei derartigen Ausführungsbeispielen kann die Deckfläche der Halteteile radial vorspringende Führungsnasen aufweisen, die Führungsflächen für die seitliche Führung des Spannbandes bilden.

Die Haltekörper können als einstückige Spritzgussteile ausgebildet sein, können alternativ jedoch aus zwei gleich ausgebildeten, miteinander verbindbaren Teilen gebildet sein, von denen jedes Teil vorspringende Führungsnasen als Führungsflächen für jeweils eine Seite des Spannbandes aufweist.

Nachstehend ist die Erfindung anhand von in der Zeichnung dargestellten Ausführungsbeispielen im Einzelnen erläutert. Es zeigen:
- Fig. 1: eine perspektivische Schrägansicht eines Ausführungsbeispieles des erfindungsgemäßen Befestigungssystems, wobei die Befestigung von lediglich drei Kabeln beispielhaft angedeutet ist;
- Fig. 2: einen vergrößert gezeichneten Ausschnitt lediglich eines Umfangsabschnittes von Fig. 2;
- Fig. 3: eine der Fig. 2 ähnliche Darstellung, wobei ein zweites Ausführungsbeispiel der Erfindung gezeigt ist;
- Fig. 4: eine vergrößert gezeichnete perspektivische Schrägansicht lediglich eines Haltekörpers als Bestandteil des ersten Ausführungsbeispieles;
- Fig. 5: eine perspektivische Schrägansicht eines Haltekörpers für das zweite Ausführungsbeispiel;
- Fig. 6: eine perspektivische Schrägansicht, die den Haltekörper von Fig. 5 in auseinandergenommenem Zustand zeigt;
- Fig. 7 und 8: eine Seitenansicht bzw. perspektivische Schrägansicht eines dritten Ausführungsbeispieles; und
- Fig. 9: eine vergrößert und aufgeschnitten gezeichnete perspektivische Schrägansicht eines Haltekörpers für das dritte Ausführungsbeispiel.

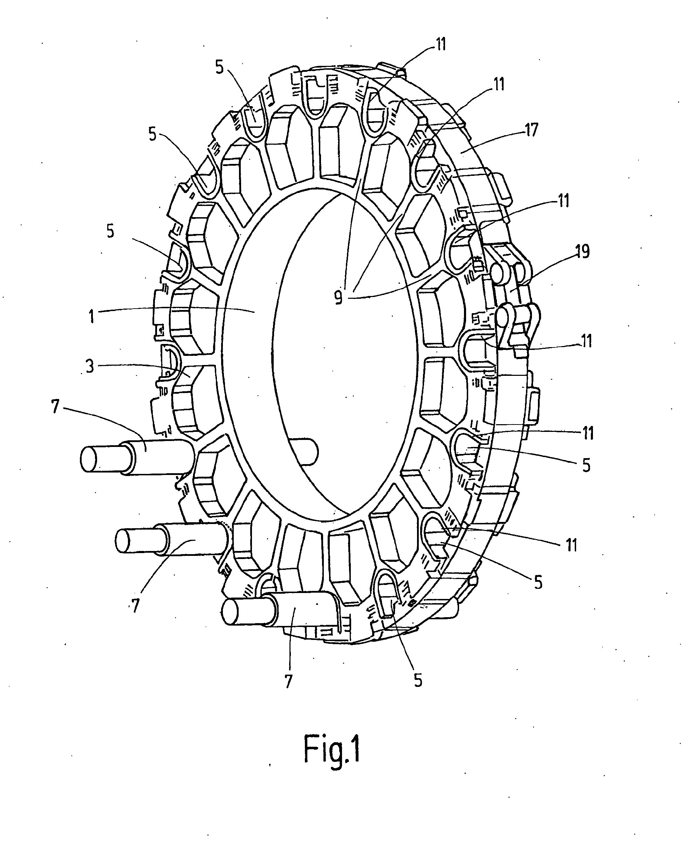

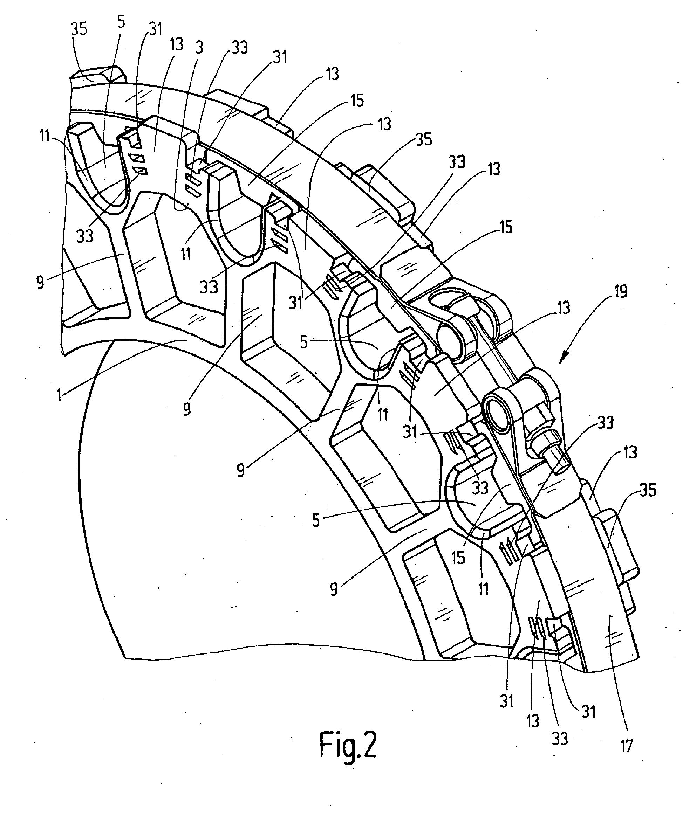

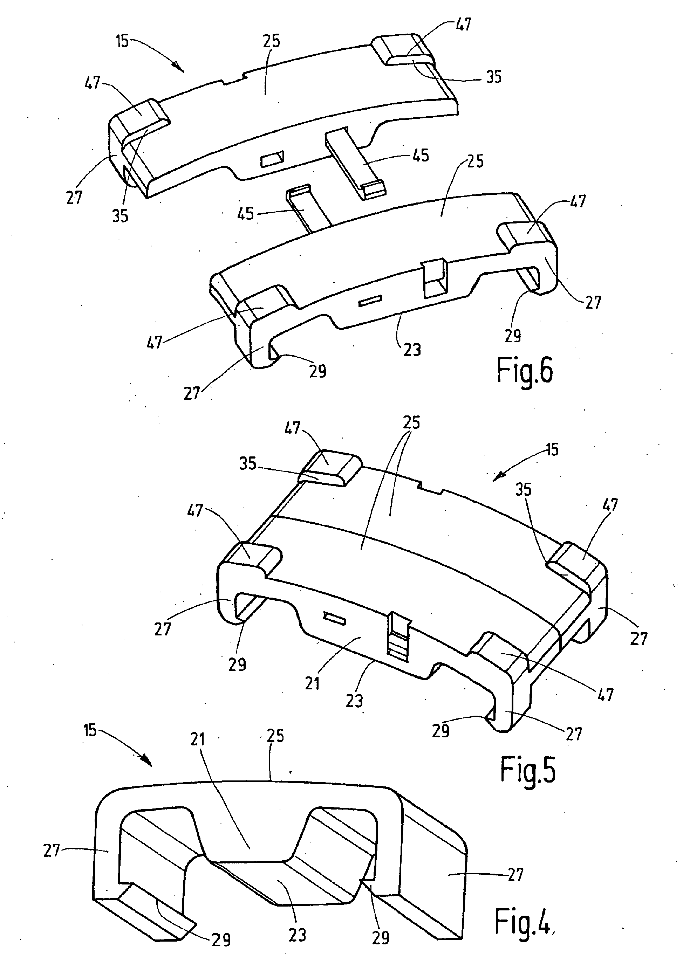

In Fig. 1, die ein erstes Ausführungsbeispiel der Erfindung zur Gänze zeigt, ist ein Grundkörper in Form eines kreisrunden Ringkörpers mit einem Innenring 1 und einem Außenring 3 vorgesehen. Rings um den gesamten Umfang des Außenringes 3 verteilt, ist eine Reihe von Kabeldurchführungen 5 vorgesehen, die in Fig. 1 nicht sämtlich beziffert sind. In Fig. 1 sind beispielhaft lediglich in drei der Kabeldurchführungen 5 Kabel 7 eingelegt. Die übrigen Kabeldurchführungen 5 sind der Übersichtlichkeit der Zeichnung halber ohne eingelegte Kabel dargestellt. Innenring 1 und Außenring 3 sind über radial verlaufende Streben 9 (in Fig. 1 lediglich teilweise beziffert) in einem Abstand voneinander gehalten. Der aus Innenring 1 und Außenring 3 gebildete Befestigungsstern ist als einstückiges Spritzgussteil ausgeführt. Nähere Einzelheiten der Gestaltung der Kabeldurchführungen 5 und der Abdeckeinrichtung, die mit den Kabeldurchführungen 5 an deren Öffnung zusammenwirken, sind in Fig. 2 und 4 dargestellt.

Wie Fig. 2 zeigt, sind die Kabeldurchführungen 5 durch Muldenkörper 11 (in Fig. 1 nicht sämtliche beziffert) in Form von radial nach außen offenen Trögen gestaltet, die durch Wandteile 13 miteinander verbunden sind, die die axial außenliegende Begrenzung des Außenringes 3 bilden. Die Abdeckeinrichtung für die Kabeldurchführungen 5 besteht aus je einem Haltekörper 15 für jede Kabeldurchführung 5 sowie ein für sämtliche Kabeldurchführungen 5 vorgesehenes Spannband 17, das sich über den gesamten Außenumfang des Außenringes 3 erstreckt und in der bei Spannbändern üblichen Weise durch eine mittels einer Spannschraube betätigbare Spanneinrichtung 19 spannbar ist. Die Fig. 4 zeigt in gesonderter Darstellung einen der Haltekörper 15 für das erste Ausführungsbeispiel, in Form eines einteiligen Spritzgussteiles mit einem zentralen Klemmteil 21, das, wenn der Haltekörper 15 zur Vorfixierung von in eine betreffende Kabeldurchführung 5 eingelegtem Kabel 7 in die Funktionsstellung gebracht ist, mit einer Anlagefläche 23 in die betreffende Kabeldurchführung 5 eingreift und am betreffenden Kabel 7 anliegt. Die der Anlagefläche 23 entgegengesetzte Oberseite der Haltekörper 15 bildet eine gewölbte Deckfläche 25 für die Anlage des Spannbandes 17, wobei die Wölbung der umfänglichen Kreisform des Außenringes 3 angepasst ist. Seitlich des Klemmteiles 21 befinden sich gegenüber der Deckfläche 25 abgewinkelte Fixierteile 27, an deren freien Enden einander zugewandte Rastnasen 29 gebildet sind. In den zwischen den Muldenkörpern 11 verlaufenden Wandteilen 13 befinden sich beidseits der Muldenkörper 11 radial außenseitig offene Ausnehmungen 31, in die beim Anbringen der Haltekörper 15 deren Fixierteile 27 eingreifen. In den Ausnehmungen 31 befinden sich Rasten 33, mit denen die Rastnasen 29 der Haltekörper 15 so verrastbar sind, dass eine radial nach innen gerichtete Bewegung, als Spannbewegung zur Übertragung der Haltekraft von der Anlagefläche 23 auf das betreffende Kabel 7 möglich ist, die Haltekörper jedoch vor dem Anlegen des Spannbandes 17 gegen Herausfallen aus den Kabeldurchführungen 5 gesichert und die betreffenden Kabel 7 daher vorfixiert sind. Als seitliche Führung für das Spannband 17 bilden die zwischen den Muldenkörpern 11 verlaufenden Wandteile 13 innenseitig Führungsflächen 35 zur seitlichen Führung des Spannbandes 17.

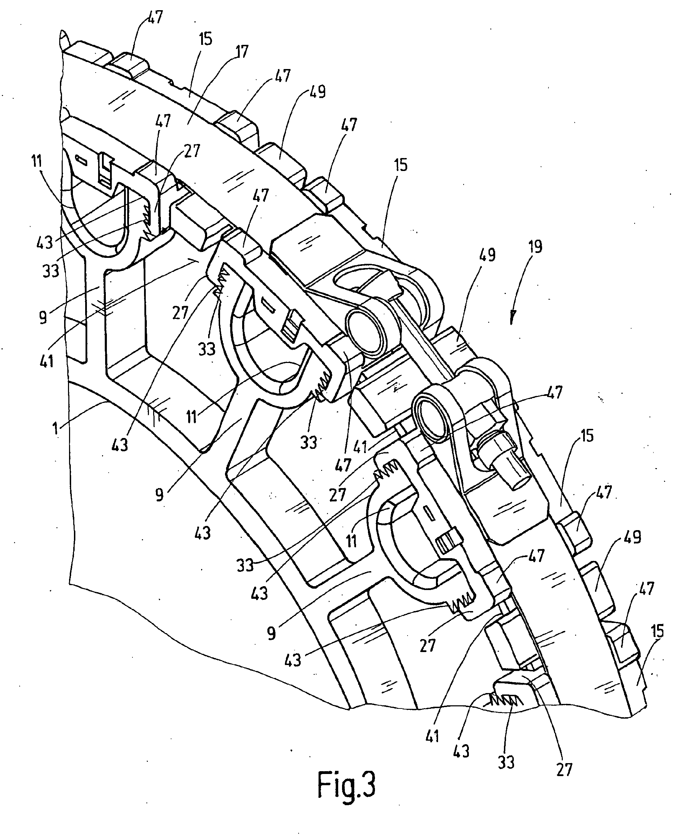

Das in Fig. 3, 5 und 6 gezeigte zweite Ausführungsbeispiel unterscheidet sich vom ersten Ausführungsbeispiel dadurch, dass die Verbindung zwischen den Muldenkörpern 11 nicht durch seitliche, axial außenliegende Wandteile 13 gebildet ist, sondern durch zentral gelegene Wandteile 41, die in einem radialen Abstand von der Öffnung der Muldenkörper 11 enden, so dass die Außenseiten 43 am Öffnungsrand der Muldenkörper 11 freiliegen. Wie Fig. 3 deutlich zeigt, befinden sich an diesen Außenseiten 43 die Rasten 33 für die Verrastung mit den Haltekörpern 15. Bei diesem Ausführungsbeispiel übergreifen die Haltekörper 15, deren Form in Fig. 5 und 6 näher dargestellt ist, mit ihren Fixierteilen 27 somit oberhalb des Randes der Wandteile 41 die Außenseiten 43 der Muldenkörper 11 für den Rasteingriff der Rastnasen 29 in die Rasten 33. Wie Fig. 5 und 6 zeigen, ist der Haltekörper 15 bei diesem Beispiel zweiteilig ausgeführt, und zwar aus baugleichen Teilen, die mittels Rastleisten 45 miteinander verrastbar sind.

Bei Fehlen der axial außenliegenden Wandteile 13, die beim ersten Ausführungsbeispiel die Führung des Spannbandes 17 bilden, sind an der Deckfläche 25 der in Fig. 5 und 6 gesondert dargestellten Haltekörper 15 radial vorspringende Führungsnasen 47 zur Bildung der seitlichen Führungsflächen 35 für das Spannband 17 vorgesehen.

Um zwischen den aufeinanderfolgenden Muldenkörpern 11 ein Knicken des Spannbandes 17 zu verhindern, befinden sich auf dem oberen Rand der Wandteile 41 in den Lückenbereichen zwischen aufeinanderfolgenden Muldenkörpern 11 Auflagestücke 49.

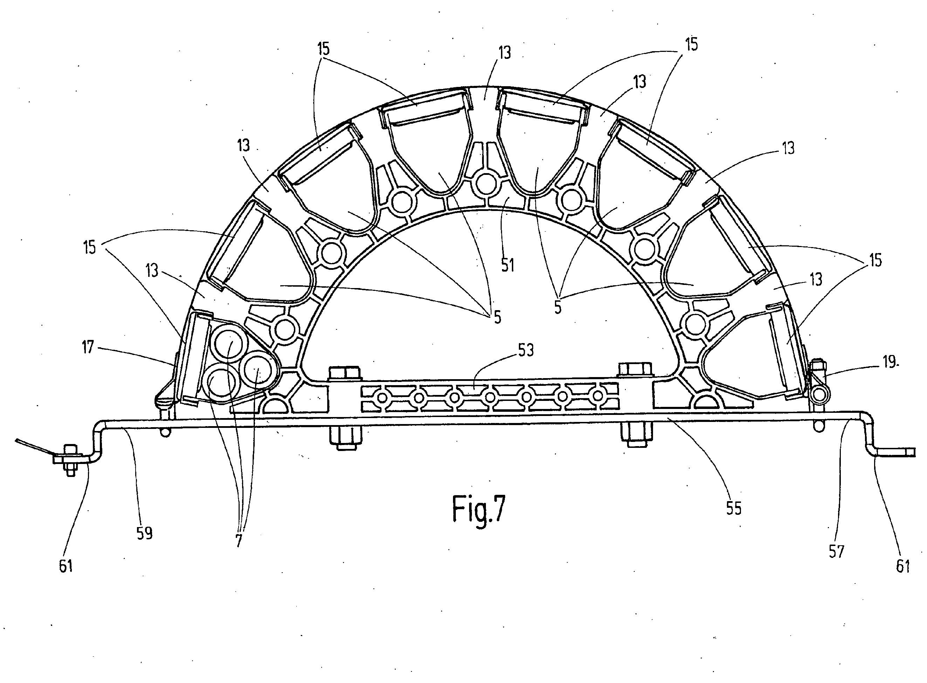

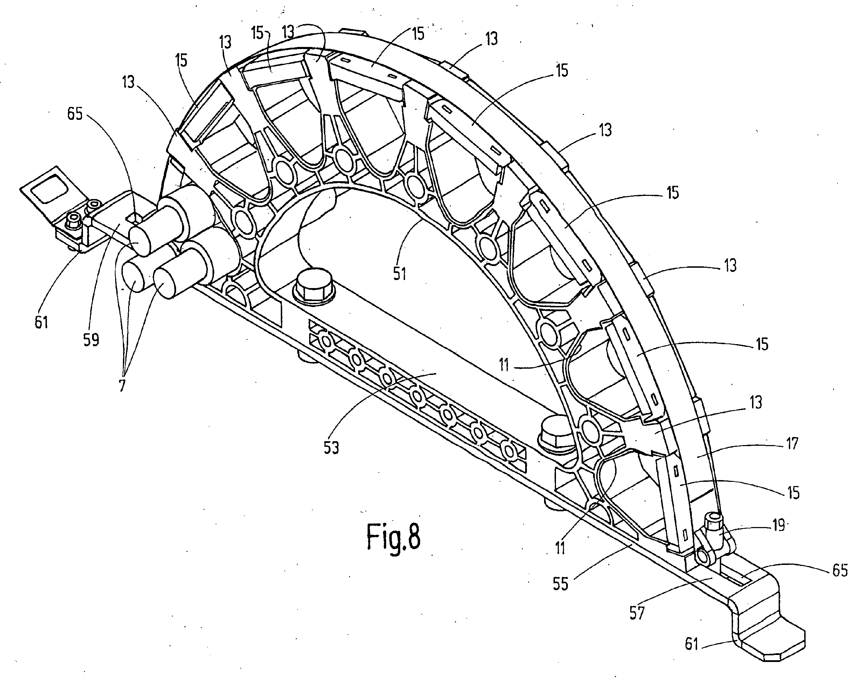

Das in Fig. 7 bis 9 gezeigte weitere Ausführungsbeispiel ist für eine Anbringung an einer flächigen Tragstruktur besonders geeignet. Anstelle des zuvor gezeigten Grundkörpers 1, der einen vollständigen, geschlossenen Kreisring bildet, ist bei diesem Ausführungsbeispiel ein Grundkörper in Form eines Ringteiles 51 vorgesehen, der sich lediglich über einen Teil einer Kreislinie erstreckt. Die Enden des Ringteiles 51 sind über eine mit dem Ringteil 51 einstückige Traverse in Form eines geraden Balkens 53 verbunden, der wiederum mit einer Konsole 55 verschraubt ist, die in Form eines flachen Stahlbandes an der Unterseite des Balkens 53 vollflächig anliegt, wobei sich die Enden 57 und 59 der Konsole 55 über die Enden des Ringteiles 51 hinaus erstrecken und an ihren jeweiligen Endabschnitten eine Abkröpfung 61 für die Abstützung und Anbringung an einer Tragstruktur aufweisen. In der Nähe der Abkröpfungen 71 befinden sich in der Konsole 55 Längsschlitze 65, die als Verankerungsstellen für die Spanneinrichtung 19 des Spannbandes 17 dienen, das, wie bei dem vorstehenden Ausführungsbeispielen über die Halteteile 15 geführt ist.

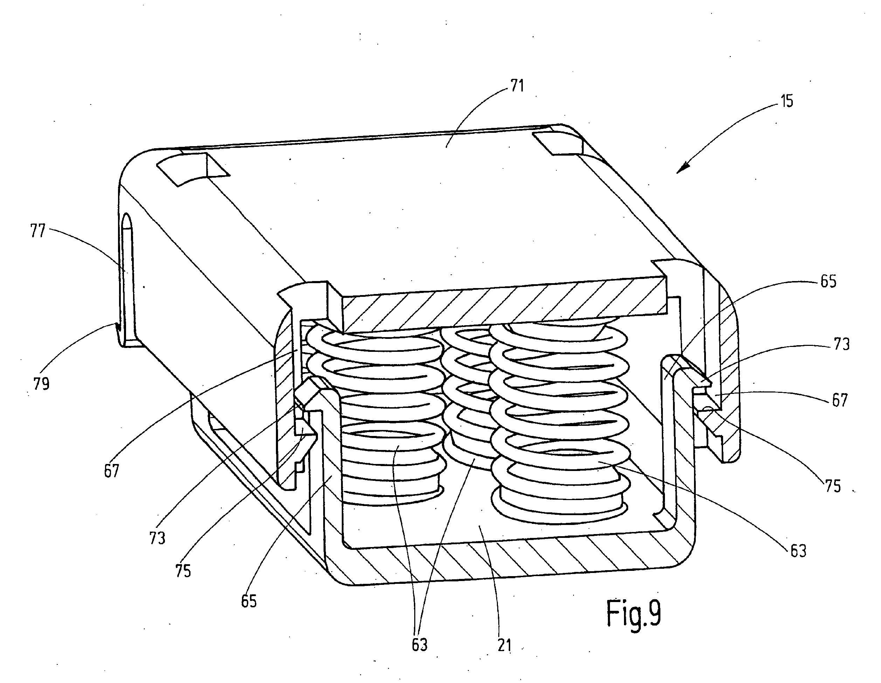

Ein weiterer Unterschied gegenüber den zuvor beschriebenen Ausführungsbeispielen besteht darin, dass die zur Klemmung der Kabel 7 vorgesehenen Klemmteile 21 der Haltekörper 15 an diesen nicht starr angeordnet sind, sondern dass die Klemmteile 21 in einem Federgehäuse 71 verschiebbar geführt und durch ein Federpaket aus mehreren Druckfedern 63 in Richtung auf die zu klemmenden Kabel 7 vorgespannt sind. Wie Fig. 9 zeigt, hat das Klemmteil 21 die Form einer rechteckförmigen Platte, von deren Eckbereichen sich Führungsleisten 65 ins Federgehäuse 71 erstrecken und darin in Führungsbahnen 67 verschiebbar geführt sind. Für die Begrenzung des Federweges und um den Austritt des durch das Federpaket belasteten Klemmteiles 21 aus dem Federgehäuse 71 zu verhindern, sind an der Führung 67 des Gehäuses und den Führungsleisten 65 des Klemmteiles 21 Anschlagnasen 73 bzw. 75 vorgesehen. Wie bei den zuvor beschriebenen Ausführungsspielen sind die Haltekörper 15 an dem den Grundkörper bildenden Ringteil 51 zur Vorfixierung der Haltekörper 15 sicherbar. Zu diesem Zweck befinden sich an den Eckbereichen des Federgehäuses 71 Sicherungsleisten 77, die den Fixierteilen 27 der zuvor beschriebenen Beispiele entsprechen und Rastnasen 79 bilden, die den Rastnasen 29 der zuvor beschriebenen Beispiele entsprechen.

## Patentansprüche

1. Befestigungssystem für Kabel (7), insbesondere bei Windkraftanlagen, mit einem Grundkörper (1, 3, 51), der an einer Tragstruktur (55) festlegbar ist und Kabeldurchführungen (5) bildet, die zum Einlegen von Kabeln (7) jeweils eine Öffnung aufweisen, die durch eine Abdeckeinrichtung (15, 17) verschließbar sind, mittels deren eine Haltekraft auf die Kabel (7) ausübbar ist, wobei die Kabeldurchführungen (5) am Grundkörper (1, 3) in einer sich zumindest über einen Teil eines Ringes erstreckenden Anordnung mit jeweils radial außenliegender Öffnung angeordnet sind, und wobei die Abdeckeinrichtung (15, 17) Haltekörper (15) aufweist, die zur Vorfixierung von in die Kabeldurchführungen (5) eingelegten Kabeln (7) mit dem Grundkörper (1, 3) verrastbar sind, **dadurch gekennzeichnet, dass** die Abdeckeinrichtung (15, 17) ein den Grundkörper (1, 3) umfassendes, über die Haltekörper (15) die Haltekraft auf die Kabel (7) ausübendes Spannband (17) aufweist.

2. Befestigungssystem nach Anspruch 1, **dadurch gekennzeichnet, dass** der Grundkörper (1, 3) die Form eines kreisrunden Ringkörpers mit einem auf einem vorzugsweise runden Tragteil anbringbaren Innenring (1) und einem diesen in einem Abstand umgebenden Außenring (3) hat, der die Kabeldurchführungen (5) bildet.

3. Befestigungssystem nach Anspruch 1, **dadurch gekennzeichnet, dass** der Grundkörper ein die Kabeldurchführungen (5) bildendes und sich über einen Teil einer Kreislinie erstreckendes Ringteil (51) aufweist, dessen Enden durch eine damit einstückige Traverse in Form eines geraden Balkens (53) verbunden sind, der mit einem Tragteil in Form einer Konsole (55) verbunden ist, deren Enden (57, 59) über das jeweilige Ende des Balkens (53) überstehen, und dass an den überstehenden Enden (57, 59) die Enden des Spannbandes (17) verankert sind.

4. Befestigungssystem nach einem der vorstehenden Ansprüche, **dadurch gekennzeichnet, dass** der Grundkörper (1, 3, 51) die Kabeldurchführungen (5) in Form von trogartigen Muldenkörpern (11) aufweist, die durch sich in Umfangsrichtung erstreckende Wandteile (13, 41) miteinander verbunden sind.

5. Befestigungssystem nach einem der vorstehenden Ansprüche, **dadurch gekennzeichnet, dass** die Haltekörper (15) ein in der Funktionsstellung in die Öffnung der Muldenkörper (11) ragendes Klemmteil (21) aufweisen, das eine die Haltekraft auf die jeweiligen Kabel (7) aufbringende Anlagefläche (23) bildet.

6. Befestigungssystem nach einem der vorstehenden Ansprüche, **dadurch gekennzeichnet, dass** die der Anlagefläche (23) entgegengesetzte Deckfläche (25) der Haltekörper (15) als Auflagefläche des Spannbandes (17) eine Wölbung aufweist, die der umfänglichen Kreislinie des Außenringes (3) angepasst ist.

7. Befestigungssystem nach einem der vorstehenden Ansprüche, **dadurch gekennzeichnet, dass** der Außenring (3) zwischen den Muldenkörpern (11) jeweils zwei Wandteile (13) aufweist, die die axialen Außenseiten des Außenringes (3) begrenzen und in denen sich beidseits der Muldenkörper (11) radial außenseitig offene Ausnehmungen (31) befinden, in denen Rasten (33) derart ausgebildet sind, dass die Haltekörper (15) mit Rastnasen (29), die an den die Muldenkörper (11) übergreifenden Teilen (27) der Haltekörper (15) vorgesehen sind, gegen eine radial nach außen gerichtete Bewegung sicherbar sind.

8. Befestigungssystem nach einem der vorstehenden Ansprüche, **dadurch gekennzeichnet, dass** die Wandteile (13) beidseits der an der Deckfläche (25) der Haltekörper (15) befindlichen Auflagefläche innenseitig Führungsflächen (35) für die seitliche Führung des Spannbandes (17) bilden.

9. Befestigungssystem nach einem der vorstehenden Ansprüche, **dadurch gekennzeichnet, dass** die Muldenkörper (11) an ihren von Teilen (27) der Haltekörper (15) übergreifbaren Außenseiten (43) Rasten (33) aufweisen, die derart ausgebildet sind, dass die Haltekörper (15) mit daran befindlichen Rastnasen (29) gegen eine radial nach außen gerichtete Bewegung sicherbar sind.

10. Befestigungssystem nach einem der vorstehenden Ansprüche, **dadurch gekennzeichnet, dass** die Deckfläche (25) der Haltekörper (15) radial vorspringende Führungsnasen (47) aufweist, die Führungsflächen (35) für die seitliche Führung des Spannbandes (17) bilden.

11. Befestigungssystem nach einem der vorstehenden Ansprüche, **dadurch gekennzeichnet, dass** die Haltekörper (15) aus zwei gleich ausgebildeten, miteinander verbindbaren Teilen gebildet sind, von denen jedes Teil vorspringende Führungsnasen (47) mit Führungsflächen (35) für jeweils eine Seite des Spannbandes (17) aufweist.

12. Befestigungssystem nach einem der vorstehenden Ansprüche, **dadurch gekennzeichnet, dass** die Haltekörper (15) ein Federgehäuse (71) aufweisen, in dem das die Anlagefläche (23) bildende Klemmteil (21) verschiebbar geführt und durch eine Federanordnung (63) in Richtung auf die zu klemmenden Kabel (7) vorgespannt ist.

## Claims

1. An attachment system for cables (7), in particular for wind power installations, comprising a base body (1, 3, 51) which can be fixed to a supporting structure (55) and forms cable lead-throughs (5) which respectively have an opening for the insertion of cables (7) and which can be closed by a covering device (15, 17) by means of which a retaining force can be applied to the cables (7), the cable lead-throughs (5) being arranged on the base body (1, 3) in an arrangement extending at least over part of a ring and with a respective opening lying on the outside radially, and the covering device (15, 17) having retaining bodies (15) which, for the pre-fixing of cables (7) inserted in the cable lead-throughs (5), can be locked to the base body (1, 3), **characterised in that** the covering device (15, 17) has a tensioning strap (17) comprising the base body (1, 3) that applies the retaining force to the cables (7) via the retaining bodies (15).

2. The attachment system according to Claim 1, **characterised in that** the base body (1, 3) has the form of a circular annular body with an inner ring (1) that can be attached to a preferably round supporting part and an outer ring (3) surrounding the latter at a distance and which forms the cable lead-throughs (5).

3. The attachment system according to Claim 1, **characterised in that** the base body has an annular part (51) forming the cable lead-throughs (5) and extending over part of a circular line and the ends of which are connected by a traverse integral with the latter in the form of a straight bar (53) which is connected to a supporting part in the form of a bracket (55) the ends (57, 59) of which project over the respective end of the bar (53) and such that the ends of the tensioning strap (17) are anchored at the projecting ends (57, 59).

4. The attachment system according to any of the preceding claims, **characterised in that** the base body (1, 3, 51) has the cable lead-throughs (5) in the form of trough-like hollow bodies (11) which are connected to one another by wall parts (13, 41) extending in the circumferential direction.

5. The attachment system according to any of the preceding claims, **characterised in that** the retaining bodies (15) have a clamping part (21) projecting into the opening of the hollow bodies (11) in the functional position and which forms a contact surface (23) applying the retaining force to the respective cables (7).

6. The attachment system according to any of the preceding claims, **characterised in that** the covering surface (25) of the retaining bodies (15) opposite the contact surface (23) has as the bearing surface of the tensioning strap (17) a bulge which is adapted to the peripheral circle line of the outer ring (3).

7. The attachment system according to any of the preceding claims, **characterised in that** the outer ring (3) has two wall parts (13) respectively between the hollow bodies (11) which define the axial outsides of the outer ring (3) and in which recesses (31) open to the outside radially are located on both sides of the hollow bodies (11) and in which detents (33) are formed such that the retaining bodies (15) can be secured against any movement directed radially to the outside by lugs (29) which are provided on the parts (27) of the retaining bodies (15) reaching over the hollow bodies (11).

8. The attachment system according to any of the preceding claims, **characterised in that** the wall parts (13) form guide surfaces (35) for the lateral guiding of the tensioning strap (17) on both sides of the contact surface located on the covering surface (25) of the retaining bodies (15).

9. The attachment system according to any of the preceding claims, **characterised in that** the hollow bodies (11) have on their outsides (43) over which parts (27) of the retaining bodies (15) can extend detents (33) which are formed such that the retaining bodies (15) can be secured against any movement directed radially to the outside by means of lugs (29) located on said retaining bodies.

10. The attachment system according to any of the preceding claims, **characterised in that** the covering surface (25) of the retaining bodies (15) has radially projecting guide lugs (47) which form guide surfaces (35) for the lateral guiding of the tensioning strap (17).

11. The attachment system according to any of the preceding claims, **characterised in that** the retaining bodies (15) are formed from two parts formed identically and that can be connected to one another, each part of which has projecting guide lugs (47) with guide surfaces (35) for one side respectively of the tensioning strap (17).

12. The attachment system according to any of the preceding claims, **characterised in that** the retaining bodies (15) have a spring housing (71) in which the clamping part (21) forming the contact surface (23) is guided displaceably and is pre-tensioned by a spring arrangement (63) in the direction of the cables (7) to be clamped.

## Revendications

1. Système de fixation de câbles (7), notamment pour des éoliennes, comprenant une pièce (1, 3, 51) de base, qui peut être fixée à une structure (55) porteuse et qui forme des traversées (5) de câbles, qui, pour y mettre des câbles (7) ont respectivement une ouverture, peuvent être fermées par un dispositif (15, 17) de recouvrement, au moyen duquel une force de maintien peut être appliquée aux câbles (7), les traversées (5) de câbles étant disposées sur la pièce (1, 3) de base dans un agencement s'étendant au moins sur une partie d'un anneau, ayant respectivement des ouvertures extérieures radialement, et le dispositif (15, 17) de recouvrement a des pièces (15) de maintien, qui, pour l'immobilisation préalable de câbles (7) mis dans les traversées de câbles, peuvent être encliquetées avec la pièce (1, 3) de base, **caractérisé en ce que** le dispositif (15, 17) de recouvrement a un collier (17) de fixation entourant la pièce (1, 3) de base et appliquant, par l'intermédiaire des pièces (15) de maintien, la force de maintien aux câbles (7).

2. Système de fixation suivant la revendication 1, **caractérisé en ce que** la pièce (1, 3) de base a la forme d'une pièce annulaire circulaire ayant un anneau (1) intérieur pouvant être mis sur une partie porteuse, de préférence circulaire, et un anneau (3) extérieur, qui entoure l'anneau (1) intérieur en en étant à distance et qui forme les traversées (5) de câbles.

3. Système de fixation suivant la revendication 1, **caractérisé en ce que** la pièce de base a une partie (51) annulaire formant les traversées (5) de câbles et s'étendant sur une partie d'une ligne circulaire, dont les extrémités sont reliées par une traverse d'un seul tenant avec elle sous la forme d'une poutre (53) droite, qui est reliée à une partie porteuse sous la forme d'une console (55), dont les extrémités dépassent de l'extrémité respective de la poutre (53), et **en ce que** les extrémités du collier (17) de fixation sont ancrées sur les extrémités (57, 59) en dépassement.

4. Système de fixation suivant l'une des revendications précédentes, **caractérisé en ce que** la pièce (1, 3, 51) de base a les traversées (5) de câbles sous la forme de pièces (11) en cuvette du type en auge, qui sont reliées les unes aux autres par des parties (13, 41) de paroi s'étendant dans la direction périphérique.

5. Système de fixation suivant l'une des revendications précédentes, **caractérisé en ce que** les pièces (15) de maintien ont une partie (21) de serrage pénétrant, dans la position de fonctionnement, dans l'ouverture des pièces (11) en cuvette et formant une surface (23) d'application appliquant la force de maintien aux câbles (7) respectifs.

6. Système de fixation suivant l'une des revendications précédentes, **caractérisé en ce que** la surface (25) de recouvrement, opposée à la surface (23) d'application, des pièces (25) de maintien a, comme surface d'application du collier (17) de fixation, une voussure, qui est adaptée à la ligne circulaire faisant le tour de l'anneau (3) extérieur.

7. Système de fixation suivant l'une des revendications précédentes, **caractérisé en ce que** l'anneau (3) extérieur a, entre les pièces (11) en cuvette, respectivement deux parties (13) de paroi, qui délimitent les côtés extérieurs axiaux de l'anneau (3) extérieur et dans lesquelles se trouvent, des deux côtés des pièces (11) en cuvette, des évidements (31) ouverts du côté extérieur radialement, dans lesquels sont constitués des crans d'arrêt (33), de manière à ce que les pièces (15) de maintien puissent, par des becs (29) d'encliquetage, qui sont prévus sur les parties des pièces (15) de maintien enjambant les pièces (11) en cuvette, être empêchées de se déplacer dans une direction radialement vers l'extérieur.

8. Système de fixation suivant l'une des revendications précédentes, **caractérisé en ce que** les parties (13) de paroi forment, des deux côtés de la surface d'application se trouvant sur la surface (25) de recouvrement, des pièces (15) de maintien du côté intérieur des surfaces (35) de guidage, pour guider latéralement le collier (17) de fixation.

9. Système de fixation suivant l'une des revendications précédentes, **caractérisé en ce que** les pièces (11) en cuvette ont, sur leur côté (43) extérieur pouvant être enjambé par des parties (27) des pièces (15) de maintien, des crans d'arrêt (33), qui sont constitués de manière à ce que les pièces (15) de maintien puissent être empêchées, par des becs (29) d'encliquetage qui s'y trouvent, de se déplacer dans une direction radialement vers l'extérieur.

10. Système de fixation suivant l'une des revendications précédentes, **caractérisé en ce que** la surface (25) de recouvrement des pièces (25) de maintien a des becs (47) de guidage, qui sont en saillie radialement et qui forment les surfaces (35) de guidage pour guider latéralement le collier (17) de fixation.

11. Système de fixation suivant l'une des revendications précédentes, **caractérisé en ce que** les pièces (15) de maintien sont formées de deux parties, qui sont constituées pareillement, qui peuvent être reliées l'une à l'autre et dont chacune a des becs (47) de guidage en saillie ayant des surfaces (35) de guidage pour respectivement une face du collier (17) de fixation.

12. Système de fixation suivant l'une des revendications précédentes, **caractérisé en ce que** les pièces (15) de maintien ont un boîtier (71) de ressorts, dans lequel la partie (21) de serrage, formant la surface (23) d'application, est guidée à coulissement et est précontrainte dans la direction des câbles (7) à serrer par un agencement (63) de ressorts.
